# EUROPÄISCHE PATENTSCHRIFT

(11) **EP 0 702 056 B1**
(45) Veröffentlichungstag und Bekanntmachung des Hinweises auf die Patenterteilung: **10.03.1999**
(21) Anmeldenummer: 95890158.9
(22) Anmeldetag: 08.09.1995
(51) Int. Cl.: C08L 23/20, C08L 23/18

(54) **Kunststoff zur Herstellung wärmebeständiger Werkstücke, insbesondere für Heisswasser-Installationen**
Moulding composition for production of thermoresistant work-pieces, particularly for hot water fittings
Matière moulable pour la production des pièces thermostabiles à travailler en particulier pour des installations à eau chaude

(30) Priorität: 13.09.1994 AT 1741/94
(43) Veröffentlichungstag der Anmeldung: 20.03.1996
(73) Patentinhaber: KE-KELIT Kunststoffwerk Gesellschaft m.b.H., A-4017 Linz (AT)
(72) Erfinder: Rametsteiner, Karl, A-4040 Linz (AT)
(74) Vertreter: Hübscher, Heiner, Dipl.-Ing.

(56) Entgegenhaltungen:
- EP-A- 0 331 408
- US-A- 4 113 804
- US-A- 5 041 491

## Beschreibung

Es ist bereits bekannt (EP 0 331 408 A), Werkstücke unter Verwendung eines Polymergemisches, in dem Äthylenpropolymer und Butenpolymer enthalten sind, herzustellen. Dabei geht es aber darum, den Übergang von Zweikristall-Modifikationen von Polybuten 1 zu beschleunigen. Der Zweck besteht darin, gut und rasch entformbare Formteile zu erreichen. Eine erhöhte Wärmebeständigkeit ergibt sich nicht. Es ist ferner bekannt (US 4 113 804 A) als Polypropylen-Polyäthylencopolymer ein Elastomer (EPDM) zu verwenden. Ähnliches gilt hinsichtlich der US 5 041 491 A, wobei in beiden Fällen das Elastomer keine Wärmebeständigkeit besitzt.

Mit Ausnahme von vernetztem Polyäthylen handelt es sich also um Thermoplaste, die ohne Schwierigkeiten extrudiert oder im Spritzgußverfahren zu Formteilen verarbeitet werden können. Polybuten bereitet aber hohe Rohstoffkosten und aufwendige Extrusionsarbeiten durch zwei Modifikationen, die erst nach mehreren Tagen stabil werden. Dabei ist der Kunststoff für manche Anwendungen, weil zu elastisch, überhaupt unbrauchbar, wie es sich z. B. beim Durchhängen von Rohrleitungen ergibt. Polyäthylen hat den Nachteil, daß es als duroplastischer Werkstoff nicht schweißbar ist. Polypropylen hat insbesondere den Nachteil einer zu niedrigen Ringzugspannung bei höheren Temperaturen sowie den Mangel einer ungenügenden Kälteschlagzähigkeit.

Erfindungsgemäß kann dagegen ein Kunststoff, bestehend aus einem Polymergemisch von 1 bis 20 Gew.% Äthylenpolymer, 5 bis 75 Gew.% Propylenpolymer und 5 bis 75 Gew. % Butenpolymer zur Herstellung von Heißwasserinstallationen verwendet werden. Es sollen also bei ausreichender Zeitstandfestigkeit bei hohen Temperaturen eine genügende Kälteschlagfestigkeit erreicht und Verarbeitungsschwierigkeiten vermieden werden.

Die Herstellung vollzieht sich üblicherweise in Polymerknetern, kann allerdings auch bei geeigneten technischen Voraussetzungen unmittelbar im Verarbeitungsweg, also z. B. im Extruder, in der Spritzgußmaschine od. dgl. erfolgen. Voraussetzung ist jedenfalls eine ausreichende Homogenisierung, wobei das Prüfen der Homogenität durch Untersuchung von Microtomschnitten in hochauflösenden Mikroskopen aus Teilen des Fertigproduktes erfolgen kann.

Es kann zweckmäßig sein, anstelle von zwei Homopolymeren wenigstens ein Copolymer vorzusehen.

Ein weiterer Vorteil bei der Verwendung des angegebenen Kunststoffes besteht darin, daß sowohl stoffgleiche Rohr- und Formstücke als auch solche aus Polypropylen und/oder Polybuten mit ihm verschweißt werden können.

Beispiel 1: Es wird ein homogenes Gemisch aus 30 Gew.% Homopolymer, 32 Gew.% Randomcopolymer, 3 Gew.% Polyäthylen mit einer Dichte von 0,95 und 35 Gew.% Polybuten mit einer Dichte von 0,917 hergestellt, so daß sich eine Zusammensetzung von 5,5 Gew.% Äthylenpolymer, 59,5 Gew.% Propylenpolymer und 35 Gew.% Butenpolymer ergibt. Dieser Kunststoff hat eine Reißdehnung von über 500 %, eine Kälteschlagfestigkeit bis -5 °C und eine 50-jährige Zeitstandfestigkeit, die bei 95 °C noch etwa eine Rinazugspannung von 4,0 N/mm² mit sich bringt.

Beispiel 2: Ein Kunststoff, der aus 25 Gew.% Homopolymer,35 Gew.% Polypropylen mit 8 Gew.% Äthylengehalt und 40 Gew.% Polybuten besteht, hat nach entsprechender homogenisierter Vermischung eine Zusammensetzung aus 2,8 Gew.% Äthylenpolymer, 40,0 Gew.% Butenpolymer und 57,2 Gew.% Propylenpolymer. Daraus werden Formteile zur Polyfusionsschweißung bei einer Temperatur von 205 °C und einem Spritzdruck von 100 bar gefertigt. Im Gegensatz zu gleichen Formteilen aus reinem Butenpolymer ist die Kühl- und Entformungszeit um zwei Drittel vermindert und liegt demnach in der Größenordnung jener eines Kunststoffes aus reinem Propylenpolymer. Die hergestellten Formteile sind zum mindestens 50-jährigen Einsatz bei Temperaturen bis 95 °C geeignet.

Beispiel 3: Als Anwendungsbeispiel wird Ein Kunststoff gemäß den Beispielen 1 und 2 in bekannter Weise zu Verbundrohren extrudiert, und zwar so, daß als Innen- und Außenschicht jeweils der angeführte Kunststoff in einer Schichtstärke von 1 mm mit einer Abweichung von + oder - 0,2 mm auf einer Mittelschicht aus hochfrequenzverscheißtem Aluminium mit einer Schichtstärke von 0,2 mm aufgebracht wird. Gleichzeitig erhält durch eine geeignete Düsenkonstruktion die Aluminiuminnen- und -außenfläche eine Haftvermittlerschicht, bestehend aus carboxylhältigem Polyamid in einer Schichtstärke von 0,02 bis 0,05 mm. Das so hergestellte Verbundrohr zeigt gegenüber einem Vergleichsprodukt mit silanvernetzter Innen- und Außenschicht den Vorteil einer höheren Flexibilität und der Verschweißbarkeit unter Beibehaltung der erforderlichen Zeitstandfestigkeit bei etwa 95 °C.

## Patentansprüche

1. Verwendung eines Kunststoffes bestehend aus einem Polymergemisch von 1 bis 20 Gew.% Äthylenpolymer, 5 - 75 Gew.% Propylenpolymer und 5 bis 75 Gew.% Butenpolymer zur Herstellung von Heißwasser-lnstallationen.

2. Verwendung nach Anspruch 1, wobei anstelle von zwei Homopolymeren wenigstens ein Copolymer eingesetzt wird.

## Revendications

1. Utilisation d'une matière synthétique constituée d'un mélange de polymère en une proportion allant de 1 à 20 % en poids de polymère d'éthylène, 5 à 75 % en poids de polymère de propylène, et 5 à 75 % en poids de polymère de butène, pour la fabrication d'installations à eau chaude.

2. Utilisation selon la revendication 1, où, au lieu de deux homopolymères, on utilise au moins un copolymère.

## Claims

1. Use of a plastic consisting of a polymer mixture of 1 to 20% by weight ethylene polymer, 5 to 75% by weight propylene polymer and 5 to 75% by weight of butene polymer for the production of hot-water installations.

2. Use according to claim 1, wherein at least one copolymer is used instead of two homopolymers.
